# EUROPÄISCHE PATENTSCHRIFT

(11) **EP 0 907 478 B1**
(45) Veröffentlichungstag und Bekanntmachung des Hinweises auf die Patenterteilung: **04.10.2001**
(21) Anmeldenummer: 97927040.2
(22) Anmeldetag: 26.05.1997
(51) Int. Cl.: B29C 44/34, B29C 44/46, C08J 9/30, C08J 9/12

(54) **VERFAHREN ZUR SCHAUMHERSTELLUNG MITTELS UNTER DRUCK GELÖSTEM KOHLENDIOXID**
PROCESS FOR FOAM PRODUCTION USING DISSOLVED UNDER PRESSURE CARBON DIOXIDE
PROCEDE POUR LA PRODUCTION DE MOUSSE A L'AIDE DE DIOXYDE DE CARBONE DISSOUS SOUS PRESSION

(30) Priorität: 07.06.1996 DE 19622742
(43) Veröffentlichungstag der Anmeldung: 14.04.1999
(73) Patentinhaber: BAYER AG, 51368 Leverkusen (DE); Hennecke GmbH, 51379 Leverkusen (DE)
(72) Erfinder: SULZBACH, Hans-Michael, D-53639 Königswinter (DE); STEILEN, Herbert, D-53639 Königswinter (DE); RAFFEL, Reiner, D-53721 Siegburg (DE); EIBEN, Robert, D-51061 Köln (DE); EBELING, Wilfried, D-51069 Köln (DE)
(86) Internationale Anmeldenummer: EP9702688
(87) Internationale Veröffentlichungsnummer: WO9747453

(56) Entgegenhaltungen:
- EP-A- 0 378 243
- DE-C- 4 422 568
- NO-A- 954 810
- BLACKWELL J B ET AL: "COMPARISON OF THE VPF AND LIQUID CO2 FOAMING PROCESSES" CELLULAR POLYMERS, Bd. 15, Nr. 2, 1.Januar 1996, Seiten 105-116, XP000589911

## Beschreibung

Die vorliegende Erfindung betrifft ein Verfahren und eine Vorrichtung zur Herstellung von Schäumen mittels unter Druck gelöstem Kohlendioxid als Treibmittel, wobei die zu verschäumende Masse unter Druck mit vorzugsweise flüssigem Kohlendioxid vermischt und anschließend unter Schaumbildung entspannt wird. Als verschäumbare Massen werden insbesondere flüssige Ausgangsprodukte für Kunststoffe eingesetzt, die aufgrund einer nach dem Verschäumen einsetzenden Polyadditions- oder Polykondensationsreaktion zum Schaum-Kunststoff aushärten. Speziell bezieht sich die Erfindung auf Polyurethanschaumstoffe.

Der Einsatz von physikalisch gelöstem Kohlendioxid als Treibmittel bei der Herstellung von Polyurethanschäumen ist aus den GB-A 803 771, US-A 3 181 199 und US-A 3 184 419 bekannt. Diese bekannten alten Vorschläge haben jedoch nicht zum technischen Einsatz geführt, da die erzeugte Schaumstruktur sehr ungleichmäßig war, insbesondere wies der Schaum große Lunker auf. Der Grund wird darin gesehen, daß das gelöste Kohlendioxid eine große Neigung hat, in Lösung zu bleiben, auch wenn die Polyurethanreaktivmischung an Kohlendioxid übersättigt ist. Zur Freisetzung des Kohlendioxids während oder nach der Entspannung der Reaktivmischung ist es erforderlich, Keimblasen zur Verfügung zu stellen, die eine kontrollierte Freisetzung des Kohlendioxids während der Entspannung begünstigen.

Das Problem ist auch beim Einsatz anderer Treibmittel wie niedermolekularen Kohlenwasserstoffen, Chlorfluorkohlenwasserstoffen, Methylenchlorid oder Wasser (chemische Freisetzung von Kohlendioxid durch Reaktion des Isocyanats mit Wasser) bekannt. In diesen Fällen hat man Blasenkeime durch Dispergierung fein verteilter Luft und/oder Stickstoff in zumindest einer der Komponenten der Polyurethanreaktivmischung bereitgestellt.

Beim Einsatz von physikalisch unter Druck gelöstem Kohlendioxid als Treibmittel wurde gemäß EP-A 645 226 analog vorgeschlagen, Stickstoff als Nukleierungsgas in die Mischkammer für die Komponenten Polyol und Isocyanat einzuführen. Dabei muß die Stickstöffmenge gegenüber konventionellen im wesentlichen bei Normaldruck arbeitenden Mischverfahren entsprechend dem herrschenden Druck erhöht werden. Die derart hergestellten Polyurethanschäume weisen jedoch noch eine unbefriedigende Schaumstruktur auf, offenbar weil bereits die Keimblasenstruktur nicht hinreichend fein und gleichmäßig ist.

Gemäß DE-A 44 22 568.7 wurde ferner vorgeschlagen, zur Nukleierung der CO₂-Freisetzung am Druckentspannungsorgan hohe Scherkräfte zu erzeugen. Obwohl nach diesem Vorschlag bei hohen Kohlendioxidgehalten zwischen 4 bis 6 Gew.-% und Entspannung von entsprechend hohem Druck sehr gute Schaumqualitäten erhalten werden, reicht bei niedrigeren Kohlendioxidgehalten der Reaktivmischung die bei der Entspannung erzeugte Übersättigung der Reaktivmischung an Kohlendioxid nicht aus, um mittels hoher Scherkräfte regelmäßig gute Schaumqualitäten zur Verfügung zu stellen. Nachteilig ist ferner, daß der Mischkammerdruck sehr nahe oberhalb des Lösungsdruckes des Kohlendioxids gehalten werden muß, was einer Volumenstromsteuerung zuwider läuft.

Aufgabe der vorliegenden Erfindung ist es, die Schaumqualitäten von Mehrkomponentenschaumstoffen unter Einsatz von unter Druck gelöstem Kohlendioxid durch Erzeugung einer sehr gleichmäßigen Blasenkeimstruktur zu verbessern.

Es wurde gefunden, daß der Mischkammerdruck im Interesse einer Mengendurchflußsteuerung der Komponenten in weiten Grenzen variieren kann, wenn Luft oder Stickstoff als Nukleierungshilfsmittel einerseits in einer der (Haupt-)komponenten und Kohlendioxid andererseits in der anderen (Haupt-)komponente gelöst wird und die das Nukleierungshilfsmittel enthaltende Komponente von hohem Druck in die Kohlendioxid enthaltende Komponente eingedüst wird.

Die vorliegende Erfindung betrifft demgemäß ein Verfahren zur kontinuierlichen Herstellung von Polyurethanblockschaum unter Einsatz von physikalisch unter Druck gelöstem Kohlendioxid als Treibmittel, wobei das Kohlendioxid vor Vermischung der Komponenten Polyol und Isocyanat in der Polyolkomponente gelöst wird und Luft oder Stickstoff in der Isocyanatkomponente gelöst wird, beide Komponenten einer Mischkammer zugeführt werden, in der ein Druck herrscht, der bei 70 bis 150 %, vorzugsweise 80 bis 130 % des Lösungsdrucks des CO₂ in der Polyolkomponente liegt, die Isocyanatkomponente unter einem Druck, der mindestens 10 bar oberhalb des Druckes, der in der Mischkammer herrscht, der Mischkammer zugeführt wird und unter Entspannung auf den Mischkammerdruck in diese eingedüst wird, wobei in der Isocyanatkomponente Luft oder Stickstoff in einer Menge von mindestens 1 g, vorzugsweise 3 bis 6 g pro kg CO₂ gelöst wird, und die Mischung nach dem Austritt aus der Mischkammer auf Atmosphärendruck entspannt wird.

Vorzugsweise beträgt der Druck der Isocyanatokomponenten vor der Mischkammer mindestens 30 bar, insbesondere bevorzugt zwischen 40 und 100 bar.

Vorzugsweise beträgt die Menge der im Isocyanat gelösten Luft 4 bis 6 g pro kg CO₂, im Falle von Stickstoff 3 bis 5 g pro kg CO₂. Die Zugabe von Luft oder Stickstoff kann auf der Saugseite der Dosierpumpe erfolgen. Bei großen Mengen an Luft oder Stickstoff jedoch führt eine saugseitige Zugabe zu Dosierproblemen an der Isocyanatpumpe. Für diesen Fall ist eine Zugabe auf der Druckseite, d.h. hinter der Dosierpumpe, geeignet. Wichtig dabei ist, daß die Distanz zwischen Statikmischer und Mischkopf-Isodüse so groß ist, daß eine Verweilzeit entsteht, in welcher die Luft bzw. der Stickstoff im Isocyanat völlig in Lösung geht.

Das Kohlendioxid als Treibmittel wird vorzugsweise in einer Menge von 1,5 bis 6 Gew.-Teile pro 100 Gew.-Teile Polyol, entsprechend einem Mischkammerdruck von ca. 4 bis 30 bar eingesetzt. Der Lösungspartialdruck des CO₂ in der Mischung beträgt etwa 3 bis 14 bar, wobei je nach Rezeptur und den eingesetzten Rohstoffen und den darin aufgrund Transport und Lagerung gelösten Luftanteilen, Schwankungen um 0,3 bar (bei niedrigen CO₂-Gehalten) bis 2 bar (bei hohen CO₂-Gehalten) möglich sind. Da das gesamte Kohlendioxid in der Polyolkomponente gelöst in die Mischkammer eingeführt wird, beträgt der Polyoldruck vor der Einleitung in die Mischkammer mindestens 5 bar (1,5 Gew.-Teile CO₂) bis mindestens 20 bar (6 Gew.-Teile CO₂):

Dabei sind übliche Rezepturen, in denen 50 bis 65 Gew.-Teile Isocyanat auf 100 Gew.-Teile Polyol eingesetzt werden, vorausgesetzt. Im Falle daß die Rezeptur aus Prepolymerkomponenten aufgebaut wird, ergeben sich entsprechend dem dann erforderlichen Mischungsverhältnis der Komponenten andere Druckverhältnisse für die Komponenten und die Mischung.

Die Summe der Lösungspartialdrücke von Kohlendioxid und Luft bzw. Stickstoff liegt nach vollständiger Vermischung der Komponenten (unter der Annahme, auch die in den Blasenkeimen freigesetzten Gasanteile seien gelöst) unterhalb des Mischkammerdrucks. Die bei der Eindüsung des Isocyanats in die Mischkammer erzeugten Blasenkeime werden offenbar während der kurzen Verweilzeit von 1 bis 2 Sekunden bis zur Entspannung der Reaktivmischung auf Atmosphärendruck nicht wieder gelöst.

Erfindungsgemäß werden sehr gleichmäßige Blasenkeime in einer Menge von 250 000 bis 500 000 pro g Reaktivmischung mit einem Keimblasendurchmesser zwischen 10 und 30 µ in der Reaktivmischung erzeugt.

Als Entspannungsorgan für die Entspannung der Reaktivmischung auf Normaldruck sind Austrittsöffnungen mit kleinem Querschnitt in mindestens einer Dimension, wie z.B. Spalte oder Siebplatten, die der Reaktivmischung einen zur Aufrechterhaltung des Mischkammerdruckes ausreichenden Strömungswiderstand entgegensetzen. Bevorzugt sind mehrere hintereinander angeordnete Siebplatten, wobei die der Mischkammer zugewandten Siebplatten einen zur Aufrechterhaltung des Mischkammerdrucks ausreichend kleinen freien Querschnitt aufweisen und mindestens eine der Mischkammer abgewandte Siebplatte vorgesehen ist, die einen erheblich größeren freien Querschnitt aufweist, so daß die Austrittsgeschwindigkeit der Reaktivmischung beim Durchtritt durch die letzte Siebplatte reduziert wird.

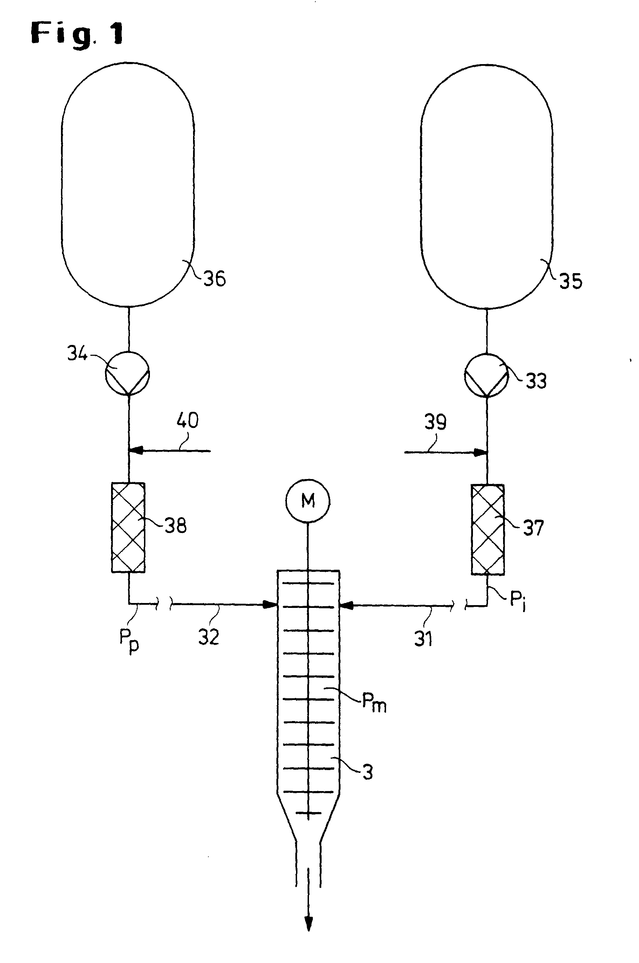

Die Erfindung wird nachfolgend anhand der beigefügten Figuren 1 bis 3 näher erläutert.

Fig. 1 zeigt einen üblicherweise in der Polyurethanschaumtechnik eingesetzten Rührwerksmischkopf 3, dem über die Leitungen 31 und 32 Isocyanat aus dem Isocyanatvorratsbehälter 35 bzw. Polyol aus dem Polyolvorratsbehälter 36 zugeführt werden. Das aus dem Isocyanatvorratsbehälter 35 austretende Isocyanat wird über Druckpumpe 33 auf einen Druck von z.B. 95 bar gebracht. Vor dem Eintritt in den Statikmischer 37 wird wie durch Pfeil 39 angedeutet das Isocyanat mit Luft beladen, die in dem Statikmischer innig mit dem Isocyanat vermischt wird. Der Eintritt der Isocyanatzuleitung 31 in die Mischkammer 3 ist mit einer Düse ausgestattet, mittels der das Isocyanat mit einem Druck Pᵢ von z.B. 90 bar in die Mischkammer eingedüst wird und auf den Mischkammerdruck Pₘ von z.B. 14 bar entspannt wird. Die Verweilzeit zwischen Statikmischer 37 und Mischkammereindüsung beträgt ca. 10 Sekunden. Das aus dem Polyol-Vorratsbehälter 36 austretende Polyol wird mittels der Druckpumpe 34 auf einen Druck von z.B. 30 bar gebracht. Vor dem Eintritt in den Statikmischer 38 wird wie durch Pfeil 40 angedeutet flüssiges, auf -20°C abgekühlter Kohlendioxid in die Polyolleitung eingedüst und in dem Statikmischer 38 vermischt. Beispielsweise kann die Menge des hinter dem Statikmischer 38 gelösten Kohlendioxids im Polyol 4 Gew.-Teile pro 100 Gew.-Teile Polyol entsprechend einem Lösungspartialdruck von 13 bar betragen. Der Druck Pₚ in der Polyolzuleitung 32 beträgt dann ca. 20 bis 23 bar. Am Eintritt der Polyolleitung 32 in die Mischkammer 3 wird das Polyol mittels eines Entspannungsventils auf den Mischkammerdruck Pₘ von 14 bar entspannt. Neben Kohlendioxid kann das Polyol noch ca. 4,5 Gew.-Teile Wasser pro 100 Teile Polyol als zusätzliches chemisches Treibmittel enthalten. Gemäß einer üblichen Rezeptur werden der Mischkammer 3 auf 100 Teile Polyol 60 Teile Isocyanat zugeführt, wobei das Isocyanat 0,33 g Luft/kg Isocyanat enthalten kann.

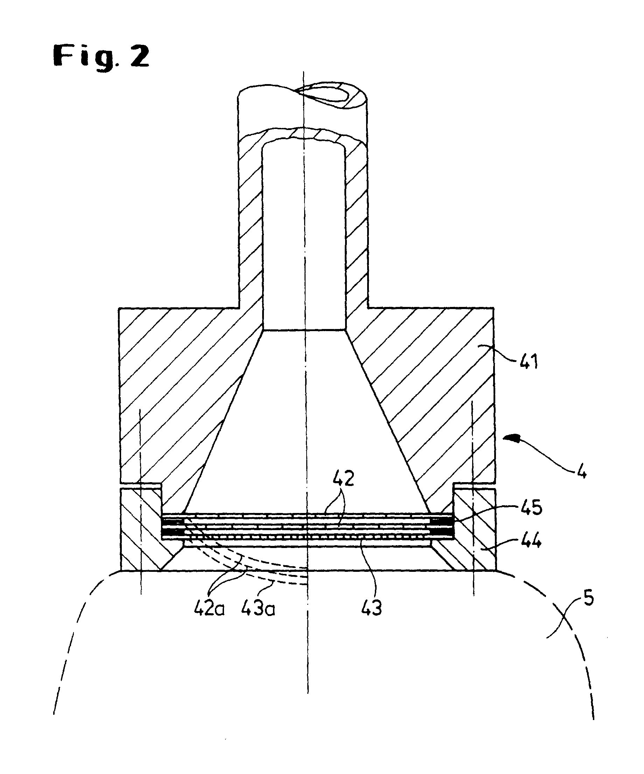

Unmittelbar am Auslaß der Mischkammer 3 ist das Entspannungsorgan zur Entspannung der Reaktivmischung auf Umgebungsdruck angeordnet. Fig. 2 zeigt eine besonders bevorzugte Ausführungsform des Entspannungsorgans 4. Dieses besteht aus einem Gehäuse 41, das durch eine oder mehrere Drucksiebplatten 42 verschlossen ist, die eine Vielzahl von Bohrungen mit z.B. 0,1 bis 0,2 mm Durchmesser aufweisen mit einer freien Querschnittsfläche aller Bohrungen von z.B. 1 bis 5 % der Siebfläche. Vor den Drucksiebplatten 42 ist eine weitere Siebplatte 43 angeordnet, die der Reduktion der Geschwindigkeit der durch die Drucksiebplatten hindurchtretenden Reaktivmischung dient. Die Geschwindigkeitsreduktionssiebplatte 43 weist ebenfalls Bohrungen mit Durchmessern von 0,1 bis 0,2 mm auf, jedoch mit einer freien Querschnittsfläche aller Durchtrittsöffnungen von 10 bis 30 %. Die Siebplatten sind durch einen Halteflansch 44 gehalten und weisen Distanzringe 45 auf, so daß sie einen Abstand von 0,5 bis 2 mm aufweisen. Bevorzugt sind die Siebplatten 42 und 43 in Strömungsrichtung ausgebaucht, wie durch die strichlierten Linien 42a und 43a angedeutet. Unmittelbar nach Durchtritt durch die Siebplatten 42 und 43 wird das gelöste Kohlendioxid in die in der Mischkammer erzeugten Blasenkeime freigesetzt. Hierdurch schäumt die Reaktivmischung sehr stark auf, wie durch die Schaumkontur 5 angedeutet.

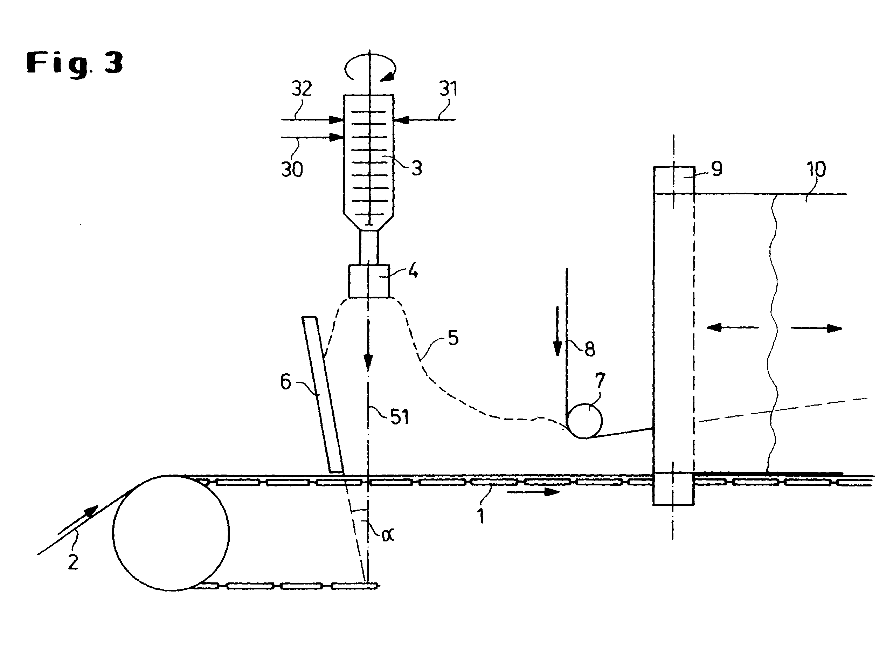

Fig. 3 erläutert das Verfahren zur kontinuierlichen Herstellung von Blockschaum. Der aus der Entspannungsvorrichtung 4 austretende Schaum 5 wird auf eine untere Kaschierfolie 2, die mit einem Transportband 1 mitläuft, aufgebracht. Eine quer auf dem Transportband angebracht Barriere 6 verhindert das Abströmen des Schaumes entgegen der Transportbandrichtung. Über eine Rolle 7 wird das obere Transportband 8 zugeführt. Seitliche Rollen 9 dienen der Zuführung der seitlichen Kaschierfolie 10. Ferner ist angedeutet, daß über eine zusätzliche Zufuhrleitung 30 dem Mischkopf weitere Hilfs- und Modifizierungsstoffe zugeführt werden können.

Mit der bei der Beschreibung der Fig. 1 angegebenen Rezeptur wird ein sehr gleichmäßiger Schaum der Rohdichte 15 kg/m³ mit sehr gleichmäßigen Schaumblasen erzeugt. Der Schaum weist 18 Schaumblasen/cm auf.

## Patentansprüche

1. Verfahren zur kontinuierlichen Herstellung von Polyurethanblockschaum unter Einsatz von physikalisch unter Druck gelöstem Kohlendioxid als Treibmittel, wobei das Kohlendioxid vor Vermischung der Komponenten Polyol und Isocyanat in der Polyolkomponente gelöst wird und Luft oder Stickstoff in der Isocyanatkomponente gelöst wird, beide Komponenten einer Mischkammer zugeführt werden, in der ein Druck herrscht, der bei 70 bis 150 % des Lösungsdrucks des CO₂ in der Polyolkomponente liegt, die Isocyanatkomponente unter einem Druck, der mindestens 10 bar oberhalb des Mischkammdruckes liegt, der Mischkammer zugeführt wird und unter Entspannung auf den Mischkammerdruck in diese eingedüst wird, wobei in der Isocyanatkomponente Luft oder Stickstoff in einer Menge von mindestens 1 g pro kg CO₂ gelöst wird, und die Mischung nach dem Austritt aus der Mischkammer auf Atmosphärendruck entspannt wird.

2. Verfahren nach Anspruch 1, **dadurch gekennzeichnet, daß** in der Polyolkomponente 0,5 bis 6 Gew.-Teile Kohlendioxid, bezogen auf 100 Gew.-Teile Polyol, gelöst werden und der Mischkammerdruck 2 bis 30 bar beträgt.

3. Verfahren nach Anspruch 1 oder 2, **dadurch gekennzeichnet, daß** im Isocyanat Luft in einer Menge von 4 bis 6 g pro kg CO₂ gelöst wird.

4. Verfahren nach einem der Ansprüche 1 bis 3, **dadurch gekennzeichnet, daß** in der Mischkammer ein Druck herrscht, der 80 bis 130 % des Lösungdrucks des CO₂ in der Polyolkomponente entspricht.

5. Verfahren nach einem der Ansprüche 1 bis 4, **dadurch gekennzeichnet, daß** in der Polyolkomponente 2 bis 6 Gew.-Teile Kohlendioxid bezogen auf 100 Gew.-Teile Polyol gelöst werden.

## Claims

1. A process for the continuous production of polyurethane block foam using carbon dioxide which is physically dissolved under pressure as a foaming agent, wherein before the polyol and isocyanate components are mixed the carbon dioxide is dissolved in the polyol component and air or nitrogen is dissolved in the isocyanate component, both components are fed to a mixing chamber in which a pressure prevails which is 70 to 150 % of the solution pressure of the CO₂ in the polyol component, the isocyanate component is fed to the mixing chamber at a pressure which is at least 10 bar higher than the mixing chamber pressure and is injected therein with depressurisation down to the mixing chamber pressure, wherein air or nitrogen in an amount of at least 1 g per kg CO₂ is dissolved in the isocyanate component, and after emerging from the mixing chamber the mixture is depressurised to atmospheric pressure.

2. A process according to claim 1, **characterised in that** 0.5 to 6 parts by weight of carbon dioxide, with respect to 100 parts by weight of polyol, are dissolved in the polyol component, and the mixing chamber pressure is 2 to 30 bar.

3. A process according to claims 1 or 2, **characterised in that** air in an amount of 4 to 6 g per kg CO₂ is dissolved in the isocyanate.

4. A process according to any one of claims I to 3, **characterised in that** a pressure prevails in the mixing chamber which corresponds to 80 to 130 % of the solution pressure of the CO₂ in the polyol component.

5. A process according to any one of claims 1 to 4, **characterised in that** 2 to 6 parts by weight of carbon dioxide, with respect to 100 parts by weight of polyol, are dissolved in the polyol component.

## Revendications

1. Procédé pour la formation continue de mousses de polyuréthane en blocs avec utilisation de dioxyde de carbone dissous physiquement sous pression en tant qu'agent porogène, dans lequel le dioxyde de carbone est dissous dans le composant polyol avant mélange des composants polyol et isocyanate et de l'air ou de l'azote est dissous dans le composant isocyanate, les deux composants sont envoyés à une chambre de mélange dans laquelle règne une pression représentant de 70 à 150 % de la pression de dissolution du CO₂ dans le composant polyol, le composant isocyanate est envoyé à la chambre de mélange sous une pression supérieure d'au moins 10 bar à celle qui règne dans la chambre de mélange et injecté dans cette dernière avec détente à la pression qui y règne, ce composant isocyanate contenant à l'état dissous de l'air ou de l'azote en quantité d'au moins 1 g/kg de CO₂, et le mélange est détendu à la pression atmosphérique après sortie de la chambre de mélange.

2. Procédé selon la revendication 1, **caractérisé en ce que** l'on dissout dans le composant polyol 0,5 à 6 parties en poids de dioxyde de carbone pour 100 parties en poids du polyol, et la pression qui règne dans la chambre de mélange va de 2 à 30 bar.

3. Procédé selon la revendication 1 ou 2, **caractérisé en ce que** l'on dissout dans l'isocyanate de l'air en quantité de 4 à 6 g/kg de CO₂.

4. Procédé selon l'une des revendications 1 à 3, **caractérisé en ce que** la pression dans la chambre de mélange représente de 80 à 130 % de la pression de dissolution du CO₂ dans le composant polyol.

5. Procédé selon l'une des revendications 1 à 4, **caractérisé en ce que** l'on dissout dans le composant polyol 2 à 6 parties en poids de dioxyde de carbone pour 100 parties en poids de polyol.
